# EUROPÄISCHE PATENTSCHRIFT

(11) **EP 3 942 259 B1**
(45) Veröffentlichungstag und Bekanntmachung des Hinweises auf die Patenterteilung: **17.05.2023**
(21) Anmeldenummer: 20712954.5
(22) Anmeldetag: 19.03.2020
(51) Int. Cl.: G01F 23/38, G01F 23/36

(54) **WINKELERFASSUNGSEINRICHTUNG**
ANGLE DETECTING DEVICE
DISPOSITIF DE DÉTECTION D'ANGLE

(30) Priorität: 20.03.2019 DE 102019203825; 20.03.2019 DE 102019203827
(43) Veröffentlichungstag der Anmeldung: 26.01.2022
(73) Patentinhaber: Vitesco Technologies GmbH, 93055 Regensburg (DE)
(72) Erfinder: WALLRAFEN, Werner, 81737 München (DE)
(74) Vertreter: Vitesco Technologies
(86) Internationale Anmeldenummer: PCT/EP2020/057664
(87) Internationale Veröffentlichungsnummer: WO 2020/188050

(56) Entgegenhaltungen:
- WO-A1-2018/119505
- DE-A1- 10 142 618
- DE-A1-102005 062 775
- JP-A- 2003 172 652
- KR-A- 20030 069 739

## Beschreibung

Die vorliegende Erfindung betrifft eine Winkelerfassungseinrichtung, eine Winkelerfassungsanordnung und eine Kraftstoff-Füllstand-Erfassungseinrichtung mit der Winkelerfassungseinrichtung sowie Verfahren zur Erfassung eines Winkels mittels der Winkelerfassungseinrichtung, der Winkelerfassungsanordnung, oder der Kraftstoff-Füllstand-Erfassungseinrichtung, sowie zur Herstellung der Winkelerfassungseinrichtung.

Aus der DE 196 48 539 C2 ist ein passiver magnetischer Positionssensor mit einer Kontaktstruktur bekannt, die unter Einwirkung einer Magneteinrichtung auslenkbar ist.

Aus der Druckschrift DE 10 2005 062 775 A1 ist ein Füllstandssensor mit einer Vergussmasse bekannt.

Eine Aufgabe einer Ausführung der vorliegenden Erfindung ist es, eine neue, vorzugsweise verbesserte, Winkelerfassungseinrichtung bzw. -anordnung, insbesondere eine Kraftstoff-Füllstand-Erfassungseinrichtung, zur Verfügung zu stellen und/oder deren Herstellung und/oder Funktion zu verbessern.

Diese Aufgabe wird durch eine Winkelerfassungseinrichtung mit den Merkmalen des Anspruchs 1 gelöst. Ansprüche 10 - 13 stellen eine Winkelerfassungsanordnung bzw. Kraftstoff-Füllstand-Erfassungseinrichtung mit einer hier beschriebenen Winkelerfassungseinrichtung bzw. ein Verfahren zur Erfassung eines Winkels mittels einer hier beschriebenen Winkelerfassungseinrichtung, einer Winkelerfassungsanordnung oder einer Kraftstoff-Füllstand-Erfassungseinrichtung, bzw. zur Herstellung einer hier beschriebenen Winkelerfassungseinrichtung unter Schutz. Vorteilhafte Ausführungsformen der Erfindung sind Gegenstand der Unteransprüche.

Die Winkelerfassungseinrichtung weist einen Träger, eine Vergussmasse, in einer Ausführung eine Flüssigverkapselung, insbesondere einen Glob-Top, die bzw. der stoffschlüssig auf dem Träger angeordnet ist bzw. wird, und einen Sensor auf, der berührungslos eine Orientierung eines Magnetfeldes eines Magneten erfasst bzw. hierzu vorgesehen, insbesondere eingerichtet ist bzw. verwendet wird.

Der Sensor ist in einer Ausführung ein Hall-(Effekt-)Sensor, insbesondere ein 2D-Vertikal-Hall-Sensor oder 2D-Lateral-Hall-Sensor, insbesondere ein Differential- oder Triaxial-Sensor, ein xMR-Sensor, insbesondere ein AMR-, GMR- oder TMR-Sensor, ein Magnetsättigungssensor oder dergleichen.

Durch einen berührungslos erfassenden Sensor kann in einer Ausführung, insbesondere im Vergleich zu der aus der DE 196 48 539 C2 bekannten Kontaktstruktur, ein Verschleiß reduziert und so in einer Ausführung eine Zuverlässigkeit, Präzision und/oder Lebensdauer verbessert werden.

Der Sensor ist bzw. wird teilweise oder ganz bzw. vollständig in der Vergussmasse angeordnet, in einer Ausführung von dieser teilweise oder ganz bzw. vollständig abgedeckt bzw. überzogen bzw. in die Vergussmasse eingebettet.

In einer Ausführung ist bzw. wird der Sensor auf dem Träger angeordnet, in einer Ausführung stoffschlüssig, in einer Weiterbildung mittels Löten und/oder Nacktchipmontage ("Chip-on-Board"-Technologie, COB).

Hierdurch kann der Sensor in einer Ausführung vorteilhaft vor Umwelteinflüssen geschützt werden. Durch die Vergussmasse ist bzw. wird in einer Ausführung der Sensor dicht, in einer Ausführung luft- und/oder flüssig-, insbesondere wasser-, benzin- und/oder dieseldicht, abgekapselt, wodurch der Sensor vorteilhaft(er) vor Umwelteinflüssen geschützt werden kann.

Insbesondere hierzu ist die Vergussmasse in einer Ausführung kraftstoff-, insbesondere benzin- und/oder dieselbeständig.

In einer Ausführung ist bzw. wird ein Außenrand der Vergussmasse von einem Außenrand des Trägers wenigstens 1 mm und höchstens 15 mm, insbesondere höchstens 10 mm, entfernt angeordnet.

In einer Ausführung kann hierdurch vorteilhaft eine Nutzenfertigung realisiert werden, bei der zunächst eine (Gesamt)Trägerplatte mit mehreren Sensoren und Vergussmassen bestückt und anschließend in Träger für die einzelnen Winkelsensoren geteilt wird.

Die Winkelerfassungseinrichtung weist eine oder mehrere, vorzugsweise zwei oder drei, in einer Ausführung flache bzw. ebene, Leiterbahnen auf, die (jeweils), in einer Ausführung stoffschlüssig, plan an dem Träger angeordnet sind bzw. werden und in einer Ausführung zur elektrischen Signalübertragung bzw. als elektrische Leiterbahnen vorgesehen, insbesondere eingerichtet sind bzw. verwendet werden. Der Träger kann somit insbesondere ein Substrat aufweisen, insbesondere sein, an, insbesondere auf oder in, dem die Leiterbahn(en) plan angeordnet ist/sind bzw. wird/werden, in einer Ausführung zusammen mit der bzw. den Leiterbahn(en) als Schaltungsträger bzw. Leiterplatte ausgebildet sein.

Durch Träger mit plan(ar)en Leiterbahnen können in einer Ausführung Winkelerfassungseinrichtungen kompakt(er) ausgebildet und/oder einfach(er) hergestellt, insbesondere ihre Sensoren vor Umwelteinflüssen geschützt bzw., insbesondere gegen Kraftstoff oder dergleichen, abgedichtet werden, insbesondere im Vergleich zu abstehenden Metall-Stiften, Leadframes, Blechen oder dergleichen.

In einer Ausführung ist bzw. wird der Sensor, insbesondere stoffschlüssig, wenigstens teilweise auf der bzw. einer oder mehrerer der Leiterbahn(en) angeordnet bzw. überdeckt diese in einer Ausführung (jeweils) wenigstens teilweise. Hierdurch kann in einer Ausführung seine, insbesondere stoffschlüssige, Befestigung verbessert werden.

In einer Ausführung sind bzw. werden die bzw. eine oder mehrere der Leiterbahn(en) aus der Vergussmasse herausgeführt, wobei die Vergussmasse die Leiterbahn(en) in einer Ausführung wenigstens lokal abdeckt.

Hierdurch können in einer Ausführung die Dichtheit und/oder Herstellung der Winkelerfassungseinrichtung (weiter) verbessert, in einer Ausführung den Träger durchgreifende Durchgangsöffnungen im Innenraum vermieden werden, die die (dauerhafte) Dichtheit des Innenraums beeinträchtigen und/oder aufwändig(er) hergestellt und/oder abgedichtet werden müssen.

Zusätzlich sind bzw. werden die bzw. eine oder mehrere der Leiterbahn(en jeweils) ganz bzw. vollständig oder (nur) teilweise in der Vergussmasse angeordnet, insbesondere von dieser abgedeckt bzw. überzogen bzw. in diese eingebettet, und/oder mit einer elektrischen Durchführung, in einer Ausführung einer Durchkontaktierung ("DuKo"), verbunden, die den Träger ganz bzw. vollständig oder (nur) teilweise durchgreift und in einer Ausführung mit einer weiteren Leiterbahn verbunden ist bzw. wird, die in einer Ausführung, insbesondere stoffschlüssig, auf einer vergussmassenabgewandten Oberfläche des Trägers angeordnet ist bzw. wird.

In einer Ausführung weisen die bzw. eine oder mehrere der Durchführung(en) bzw. -kontaktierung(en jeweils) eine Durchgangspassage im Träger auf, die diesen durchgreift, wobei die Durchgangspassage elektrisch leitend gefüllt oder ihre (Innen)Wandung elektrisch leitend beschichtet ist, so dass die damit verbundene, wenigstens teilweise in der Vergussmasse angeordnete Leiterbahn in einer Ausführung von einer vergussmassenabgewandeten Seite des Trägers aus über die Durchführung bzw. -kontaktierung elektrisch versorgt und/oder abgegriffen werden kann.

In einer Ausführung sind die bzw. eine oder mehrere der Durchführung(en) bzw. -kontaktierung(en jeweils) luft- und/oder flüssig-, insbesondere wasser-, benzin- und/oder dieseldicht, verschlossen bzw. abgedichtet, in einer Ausführung stoffschlüssig, insbesondere durch Löten, in einer Ausführung metallisches oder Glaslöten, Kleben und/oder die Vergussmasse.

In einer Ausführung ist ein Ende der bzw. einer oder mehrerer der Durchführungen jeweils) in der Vergussmasse angeordnet. In einer Ausführung sind beide Enden der bzw. einer oder mehrerer der Durchführungen jeweils) außerhalb der Vergussmasse angeordnet.

Hierdurch kann in einer Ausführung jeweils, insbesondere in Kombination von zwei oder mehr dieser Merkmale, die Signalübertragung aus der Vergussmasse einfach(er), kompakt(er) und/oder zuverlässig(er) realisiert werden.

In einer Ausführung sind bzw. werden somit die bzw. eine oder mehrere der Leiterbahn(en), die ganz bzw. vollständig in der Vergussmasse angeordnet sind, (jeweils) mit einer (der) Durchführung(en) verbunden, deren eines Ende ebenfalls in der Vergussmasse angeordnet ist, insbesondere mit diesem Ende, wobei in einer Ausführung das andere Ende dieser Durchführung mit einer weiteren Leiterbahn auf einer vergussmassenabgewandten Oberfläche des Trägers verbunden sein bzw. werden kann.

Zusätzlich oder alternativ sind bzw. werden in einer Ausführung die bzw. eine oder mehrere der Leiterbahn(en), die aus der Vergussmasse herausgeführt sind, (jeweils) mit einer (der) Durchführung(en) verbunden, deren beide Enden außerhalb der Vergussmasse angeordnet sind, insbesondere mit einem dieser Enden, wobei in einer Ausführung das andere Ende dieser Durchführung mit einer weiteren Leiterbahn auf einer vergussmassenabgewandten Oberfläche des Trägers verbunden sein bzw. werden kann.

In einer Ausführung sind bzw. werden die bzw. eine oder mehrere der Leiterbahn(en), insbesondere also die bzw. eine oder mehrere der Leiterbahn(en), die aus der Vergussmasse herausgeführt sind oder die bzw. eine oder mehrere der, insbesondere ganz in der Vergussmasse angeordnete(n), Leiterbahn(en), die mit einer (der) elektrischen Durchführung(en), die den Träger durchgreift, verbunden sind, (jeweils), in einer Ausführung über wenigstens eine weitere Leiterbahn, mit einem (elektrischen) Anschluss verbunden, der in einer Ausführung auf einer vergussmassenzugewandten Seite des Trägers angeordnet ist, in einer anderen Ausführung auf einer vergussmassenabgewandten Seite des Trägers. An dem Anschluss kann in einer Ausführung eine Leitung befestigt sein bzw. werden, in einer Ausführung stoffschlüssig, insbesondere durch Löten, oder reibschlüssig, insbesondere mittels einer Klammer.

Durch einen vergussmassenseitigen Anschluss kann in einer Ausführung die Winkelerfassungseinrichtung kompakt(er) ausgebildet werden, durch einen vergussmassenabgewandten Anschluss in einer Ausführung die vergussmassenabgewandte Oberfläche des Trägers besser bzw. mit genutzt werden.

In einer Ausführung weist die Winkelerfassungseinrichtung eine Auswerteschaltung auf, die ganz oder teilweise in der Vergussmasse, insbesondere, in einer Ausführung stoffschlüssig, auf dem Träger, angeordnet ist bzw. wird, in einer Ausführung mittels Nacktchipmontage (COB), und/oder Signale des Sensors auswertet, insbesondere verarbeitet, bzw. hierzu vorgesehen, insbesondere eingerichtet ist bzw. verwendet wird.

Hierdurch kann in einer Ausführung die Auswertung bzw. Verarbeitung von Signalen des Sensors wenigstens teilweise durch die Winkelerfassungseinrichtung selber realisiert und damit in einer Ausführung die Anbindung und/oder der Einsatz der Winkelerfassungseinrichtung verbessert werden.

In einer Weiterbildung ist die Auswerteschaltung, in einer Ausführung über die bzw. eine oder mehrere der Leiterbahn(en), programmiert bzw. sind Auswerteschaltung und gegebenenfalls Leiterbahn(en) hierzu vorgesehen, insbesondere eingerichtet bzw. werden hierzu verwendet. Insbesondere kann eine, in einer Ausführung veränderliche, Kennlinie für den Sensor in der Auswerteschaltung abgespeichert und/oder über die bzw. eine oder mehrere der Leiterbahn(en) vorgegeben, insbesondere verändert, werden bzw. sein.

Hierdurch kann die Winkelerfassungseinrichtung in einer Ausführung vorteilhaft in situ (erst- oder nach)justiert werden.

Zusätzlich oder alternativ ist die Auswerteschaltung in einer Ausführung als Nacktchip ("bare die") ausgebildet.

Hierdurch kann in einer Ausführung die Herstellung (weiter) verbessert und/oder die Winkelerfassungseinrichtung kompakt(er) ausgebildet werden.

Zusätzlich oder alternativ ist die Auswerteschaltung in einer Ausführung als integrierte Schaltung mit dem Sensor ausgebildet bzw. mit dem Sensor zu einer integrierten Schaltung zusammengefasst.

Hierdurch kann in einer Ausführung die Herstellung (weiter) verbessert und/oder die Winkelerfassungseinrichtung kompakt(er) ausgebildet werden.

In einer alternativen Ausführung ist die Auswerteschaltung von dem Sensor separat ausgebildet, insbesondere Auswerteschaltung und Sensor, in einer Ausführung auf dem Träger, einzeln und/oder voneinander beabstandet angeordnet.

Hierdurch kann in einer Ausführung die Herstellung unterschiedlicher Winkelerfassungseinrichtungen vereinfacht werden.

In einer Ausführung weist die Winkelerfassungseinrichtung ein oder mehrere elektrische Bausteine, insbesondere Kondensator(en) oder dergleichen, auf, die (jeweils) ganz oder teilweise in der Vergussmasse, in einer Ausführung auf dem Träger und/oder stoffschlüssig, angeordnet, und mit dem Sensor und/oder der Auswerteschaltung, insbesondere über die bzw. eine oder mehrere der Leiterbahn(en), elektrisch verbunden sind bzw. werden.

Hierdurch können in einer Ausführung eine Signalfilterung und/oder ein, insbesondere elektrischer, Schutz, insbesondere Störspannungs- oder Überlastungsschutz, vorteilhaft realisiert werden.

In einer Ausführung sind bzw. werden der Sensor, die Auswerteschaltung und/oder der bzw. einer oder mehrere der elektrischen Bausteine (jeweils), in einer Ausführung mit Kontakten und/oder Leitungen, insbesondere Bond-Drähten oder dergleichen, mit der bzw. einer oder mehrerer der Leiterbahn(en) verbunden.

In einer Ausführung werden der Sensor, die Auswerteschaltung und/oder der bzw. einer oder mehrere der elektrischen Bausteine über die bzw. eine oder mehrere der Leiterbahn(en) elektrisch versorgt und/oder abgegriffen und/oder, insbesondere elektrische, Signale von dem Sensor, der Auswerteschaltung und/oder dem bzw. einem oder mehreren der elektrischen Bausteine und/oder, insbesondere elektrische, Signale an den Sensor, die Auswerteschaltung und/oder den bzw. einen oder mehrere der elektrischen Bausteine über die bzw. eine oder mehrere der Leiterbahn(en) übertragen bzw. die Leiterbahn(en) hierzu verwendet bzw. ist/sind diese Leiterbahn(en) hierzu vorgesehen, insbesondere eingerichtet.

Hierdurch kann in einer Ausführung die Herstellung und/oder elektrische Anbindung (weiter) verbessert werden.

In einer Ausführung weist der Träger einen oder mehrere elektrisch isolierende Oberflächenbereiche auf, in einer Weiterbildung einen ein- oder mehrschichtigen Grundkörper bzw. ein ein- oder mehrschichtiges Substrat aus elektrisch isolierendem Material.

Dadurch können in einer Ausführung die Leiterbahnen vorteilhaft realisiert bzw. elektrisch voneinander isoliert werden.

In einer Ausführung weist die Vergussmasse Silikon-, Acrylat-, Kunststoff-, insbesondere Polyurethan-, und/oder Epoxidharz-Material, in einer Ausführung ein-, zwei- oder mehrkomponentiges und/oder optisch und/oder thermisch härtendes Material, insbesondere Polymermaterial, auf, sie kann insbesondere hieraus bestehen bzw. hergestellt sein bzw. werden, insbesondere also durch optisches und/oder thermisches (Aus)Härten des Vergussmaterials nach Aufbringen auf Träger bzw. Sensor, Auswerteschaltung und/oder elektrische(n) Baustein(e).

Hierdurch können in einer Ausführung Sensor, Auswerteschaltung bzw. elektrische(r) Baustein(e) besonders vorteilhaft, insbesondere einfach und/oder zuverlässig, abgekapselt bzw. vor Umwelteinflüssen geschützt werden.

In einer Ausführung ist bzw. wird der Träger, insbesondere eine vergussmassenzugewandte Oberfläche des Trägers, ganz bzw. vollständig oder teilweise mit einem Überzug beschichtet. Zusätzlich oder alternativ ist bzw. wird die Vergussmasse in einer Ausführung ganz bzw. vollständig oder teilweise mit einem, insbesondere diesem, Überzug beschichtet, insbesondere also zusammen mit dem Träger. Zusätzlich oder alternativ sind bzw. werden die bzw. eine oder mehrere der Leiterbahn(en) in einer Ausführung (jeweils) vollständig oder teilweise mit einem, insbesondere diesem, Überzug (mit)beschichtet, insbesondere also zusammen mit dem Träger bzw. der Vergussmasse. In einer Ausführung ist bzw. wird ein trägerseitiger Rand der Vergussmasse bzw. ein Rand(bereich) bzw. Übergang(sbereich) zwischen Träger und Vergussmasse ganz bzw. vollständig oder teilweise mit einem, insbesondere diesem, Überzug beschichtet.

Der Überzug ist in einer Ausführung kraftstoff-, insbesondere benzin- und/oder dieselbeständig, in einer Ausführung weist er, insbesondere hierzu, Parylen auf, kann insbesondere hieraus bestehen. Zusätzlich oder alternativ ist bzw. wird der Überzug in einer Ausführung mittels chemischer Gasabscheidung ("Chemical Vapor Deposition" CVD) aufgebracht.

Hierdurch können in einer Ausführung Sensor, Auswerteschaltung bzw. elektrische(r) Baustein(e) besonders vorteilhaft, insbesondere einfach und/oder zuverlässig, abgekapselt bzw. vor Umwelteinflüssen geschützt werden.

Nach einer Ausführung der vorliegenden Erfindung weist eine Winkelerfassungsanordnung eine hier beschriebene Winkelerfassungseinrichtung und einen beweglichen Magneten auf, wobei in einer Ausführung eine Orientierung eines Magnetfeldes dieses Magneten durch den Sensor berührungslos erfasst wird bzw. erfassbar ist.

In einer Ausführung ist bzw. wird der Träger zwischen Vergussmasse und Magnet bzw. der Magnet auf der der Vergussmasse abgewandten Seite des Trägers angeordnet.

Dadurch können in einer Ausführung aus der Vergussmasse herausgeführte Leiterbahnen direkt(er) kontaktiert werden.

In einer alternativen Ausführung ist bzw. wird die Vergussmasse zwischen Träger und Magnet bzw. der Magnet auf der dem Träger abgewandten Seite der Vergussmasse angeordnet.

Hierdurch kann in einer Ausführung eine Durchkontaktierung durch den Träger besonders vorteilhaft realisiert werden. Zusätzlich oder alternativ kann hierdurch in einer Ausführung ein kleiner(er) Abstand des Sensors zum Magnet realisiert werden.

In einer Ausführung wird bzw. ist der Magnet um eine, insbesondere kinematische, Rotationsachse drehbar (gelagert), die die Vergussmasse, insbesondere virtuell, schneidet und/oder mit einer Höhenachse des Trägers, die in Richtung seiner, insbesondere minimalen, Wandstärke verläuft, einen Winkel einschließt, der höchstens 45°, insbesondere höchstens 30°, in einer Ausführung höchstens 15°, beträgt, insbesondere also auf dem Träger bzw. dessen Ebene, wenigstens im Wesentlichen, senkrecht steht.

Hierdurch kann in einer Ausführung die Winkelerfassungsanordnung kompakt(er) ausgebildet werden und/oder präzise(r) die Orientierung bzw. Winkellage des Magneten erfassen.

Eine erfindungsgemäße Winkelerfassungseinrichtung bzw. -anordnung kann mit besonderem Vorteil zur Erfassung einer Kraftstoff-Füllstandshöhe verwendet werden bzw. vorgesehen, insbesondere eingerichtet sein, insbesondere aufgrund einer vorteilhaften Dichtheit und/oder Winkelerfassung.

Entsprechend weist nach einer Ausführung der vorliegenden Erfindung eine Kraftstoff-Füllstand(shöhen)-Erfassungseinrichtung, insbesondere für ein Kraftfahrzeug, in einer Ausführung eines Kraftfahrzeugs, eine hier beschriebene Winkelerfassungseinrichtung und einen Magneten, dessen Magnetfeldorientierung durch den Sensor der Winkelerfassungseinrichtung berührungslos erfasst wird bzw. erfassbar ist, bzw. eine hier beschriebene Winkelerfassungsanordnung auf.

In einer Ausführung ist mit diesem Magneten bzw. dem Magneten dieser Winkelerfassungsanordnung der Kraftstoff-Füllstand(shöhen)-Erfassungseinrichtung ein Schwimmer gekoppelt, in einer Ausführung mechanisch, insbesondere über ein Gestänge oder dergleichen, und/oder derart, dass eine Füllstandshöhenänderung zu einer, insbesondere definierten, Verdrehung des Magneten um eine bzw. die Rotationsachse bzw. eine entsprechende Veränderung einer Orientierung seines Magnetfeldes führt, die durch den Sensor erfassbar ist bzw. erfasst wird.

Nach einer Ausführung der vorliegenden Erfindung wird zur Erfassung eines Winkels mittels einer hier beschriebenen Winkelerfassungseinrichtung, insbesondere -anordnung, in einer Ausführung zur Erfassung einer Kraftstoff-Füllstandshöhe mittels einer hier beschriebenen Kraftstoff-Füllstand(shöhen)-Erfassungseinrichtung, eine Orientierung eines Magnetfeldes eines bzw. des Magneten mittels des Sensors berührungslos erfasst und ein entsprechendes, in einer Ausführung durch die Auswerteschaltung und/oder auf Basis einer in der Winkelerfassungseinrichtung, insbesondere Auswerteschaltung, gespeicherten, in einer Ausführung über die bzw. eine oder mehrere der Leiterbahn(en) vorgegebene, insbesondere veränderte, Kennlinie, verarbeitetes, Signal, in einer Ausführung über die bzw. eine oder mehrere der Leiterbahn(en), ausgegeben.

Nach einer Ausführung der vorliegenden Erfindung wird zur Herstellung einer hier beschriebenen Winkelerfassungseinrichtung die Vergussmasse stoffschlüssig auf dem Träger, insbesondere wenigstens teilweise auf dem Sensor und gegebenenfalls der Auswerteschaltung und/oder dem bzw. den elektrischen Bausteinen, angeordnet, in einer Ausführung in flüssiger oder pastöser Form, und dort in einer Ausführung, insbesondere optisch und/oder thermisch, (aus)gehärtet.

Zusätzlich oder alternativ wird nach einer Ausführung der vorliegenden Erfindung zur Herstellung mehrerer, in einer Ausführung baugleicher, hier beschriebener Winkelerfassungseinrichtungen eine, insbesondere einstückige, Trägerplatte zunächst mit mehreren Sensoren, in einer Ausführung zusätzlich mit mehreren Auswerteschaltungen und/oder elektrischen Bausteinen, bestückt und anschließend in Träger für die einzelnen Winkelsensoren geteilt.

In einer Ausführung werden nach dem Bestücken der Trägerplatte mit den Sensoren und gegebenenfalls Auswerteschaltungen und/oder elektrischen Bausteinen mehrere, in einer Ausführung gleichartige, Vergussmassen(portionen) stoffschlüssig mit der, in einer Ausführung noch einstückigen, Trägerplatte verbunden, so dass jeweils einer der Sensoren und gegebenenfalls eine der Auswerteschaltungen und/oder ein oder mehrere der elektrischen Bausteine ganz oder teilweise in einer dieser Vergussmassen angeordnet ist bzw. sind, gegebenenfalls die solcherart bestückte Trägerplatte mit dem Überzug beschichtet, und anschließend die solcherart bestückte und gegebenenfalls beschichtete Trägerplatte in (Träger für die bzw. der) einzelne(n) Winkelerfassungseinrichtung(en) geteilt bzw. vereinzelt. Insbesondere können somit die Trägerplatten ein Nutzen sein bzw. die Winkelerfassungseinrichtungen mittels Nutzenfertigung hergestellt werden.

In einer Ausführung werden bzw. sind der Sensor, die Auswerteschaltung und/oder der bzw. die elektrische(n) Baustein(e) der bzw. einer oder mehrerer Winkelerfassungseinrichtung(en jeweils) mit der bzw. einer oder mehreren der Leiterbahn(en) elektrisch verbunden, in einer Ausführung stoffschlüssig, über Kontakte und/oder mittels Drähten, insbesondere Bond-Drähten, in einer Ausführung beim oder nach dem Bestücken der Trägerplatte mit den Sensoren, Auswerteschaltungen bzw. elektrischen Bausteinen und vor dem Aufbringen der Vergussmasse(n).

In einer Ausführung ist der Träger mit der bzw. den Leiterbahn(en) (als) eine Leiterplatte bzw. ein Schaltungsträger bzw. die Trägerplatte (als) eine Gesamtleiterplatte (ausgebildet).

Zusätzlich oder alternativ weist in einer Ausführung der Träger Keramik-, Glas-, Kunststoff- und/oder Epoxidharz-Material, insbesondere Keramik-, Glas-, Kunststoff- und/oder Epoxidharz-Laminat und/oder -Verbundwerkstoff, in einer Ausführung Kunststoff- und/oder Epoxidharz-Material, insbesondere Polyimid, Polytetrafluorethylen bzw. Kohlenwasserstoffharz, insbesondere mit Glasfasern und/oder Keramik, insbesondere Keramikfüllstoff, auf, kann insbesondere hieraus, insbesondere also aus Keramikwerkstoff, Epoxy-Glasfaser-Verbundmaterial, Kohlenwasserstoffharz mit Keramikfüllstoff, Polytetrafluorethylen-Verbundwerkstoff mit Keramik oder Polyimid-Verbundwerkstoff mit Glasfasern, hergestellt sein bzw. werden.

Hierdurch kann in einer Ausführung jeweils, insbesondere in Kombination von zwei oder mehr der oben genannten Merkmale, die Herstellung und/oder Dichtheit, insbesondere Lebensdauer, der Winkel- bzw. Kraftstoff-Füllstand-Erfassungseinrichtung (weiter) verbessert und/oder diese einfacher hergestellt werden.

Im Weiteren wird die Erfindung unter Bezugnahme auf Figurendarstellungen im Einzelnen erläutert. Aus den Unteransprüchen und der nachfolgenden Beschreibung bevorzugter Ausführungen ergeben sich weitere vorteilhafte Weiterbildungen der Erfindung. Hierzu zeigen, teilweise schematisiert:
- Fig. 1: eine Kraftstoff-Füllstand-Erfassungseinrichtung mit einer Winkelerfassungsanordnung mit einer Winkelerfassungseinrichtung,
- Fig. 2: die Winkelerfassungsanordnung in einer Draufsicht,
- Fig. 3: die Winkelerfassungsanordnung in einem Schnitt längs der Linie III-III in Fig. 2,
- Fig. 4: eine Winkelerfassungsanordnung nach einer Ausführung der vorliegenden Erfindung, und
- Fig. 5: eine Draufsicht auf eine Trägerplatte während der Herstellung der Winkelerfassungseinrichtung.

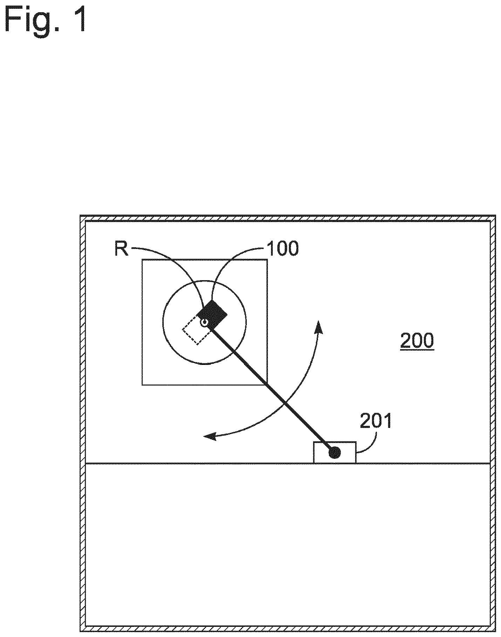

Fig. 1 zeigt eine Kraftstoff-Füllstand-Erfassungseinrichtung mit einer in einem Kraftstofftank 200 angeordneten Winkelerfassungsanordnung mit einer Winkelerfassungseinrichtung.

Ein Schwimmer 201 ist mit einem Permanentmagneten 100 der Erfassungseinrichtung derart gekoppelt, dass eine Füllstandshöhenänderung zu einer Verdrehung des Magneten 100 um eine Rotationsachse R führt, die auf der Zeichenebene der Fig. 1 senkrecht steht.

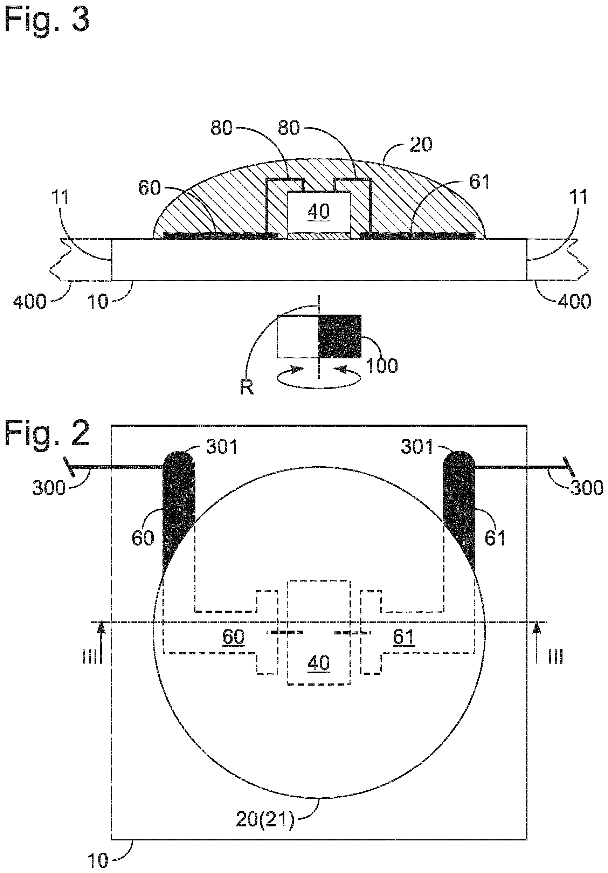

Fig. 2 zeigt die Winkelerfassungsanordnung in einer Draufsicht, Fig. 3 in einem Schnitt längs der Linie III-III in Fig. 2.

Die Winkelerfassungseinrichtung dieser Winkelerfassungsanordnung weist einen Träger 10 und eine Vergussmasse in Form eines Glob Tops 20 auf.

Auf einer (in Fig. 3 oberen) Oberfläche des Trägers 10 sind stoffschlüssig zwei Leiterbahn 60, 61 angeordnet, die teilweise von der Vergussmasse 20 abgedeckt werden.

Ein Außenrand 21 dieser Vergussmasse 20 ist von einem Außenrand 11 des Trägers 10 zwischen 1 mm und 15 mm entfernt.

Innerhalb der Vergussmasse 20 ist ein Sensor zur berührungslosen Erfassung einer Orientierung eines Magnetfeldes des Magneten 100 angeordnet, der in Fig. 2, 3 mit einer Auswerteschaltung zu einer integrierten Schaltung 40 zusammengefasst ist, welche stoffschlüssig auf dem Träger 10 angeordnet und über Bond-Drähte 80 mit den Leiterbahn 60, 61 verbunden ist, die ihrerseits aus der Vergussmasse 20 herausgeführt sind und über die einerseits Signale der integrierten Schaltung 40 an Leitungen 300 ausgegeben werden können, die an Anschlüssen 301 stoff- oder reibschlüssig mit den Leiterbahn 60, 61 verbunden sind, und über die andererseits umgekehrt eine Kennlinie der Auswerteschaltung der integrierten Schaltung 40 zur Auswertung des Sensors in situ programmierbar, insbesondere umprogrammierbar, ist.

In der Fig. 2, 3 ist der Träger 10 zwischen der Vergussmasse 20 und dem Magnet 100 angeordnet, dessen Rotationsachse R die Vergussmasse 20 schneidet und mit einer Höhenachse des Trägers in Richtung seiner Wandstärke (vertikal in Fig. 3) einen Winkel von etwa 0° einschließt.

Zur Erfassung der Füllstandshöhe wird die Orientierung des Magnetfeldes des Magneten 100 mittels des Sensors der integrierten Schaltung 40 berührungslos erfasst und ein entsprechendes, durch die Auswerteschaltung der integrierten Schaltung 40 auf Basis einer in dieser gespeicherten bzw. programmierten Kennlinie verarbeitetes Signal über die Leiterbahnen 60, 61 an die Leitungen 300 ausgegeben.

Zur Herstellung mehrerer baugleicher der vorstehend erläuterten Winkelerfassungseinrichtungen werden zunächst eine in Fig. 3 gestrichelt angedeutete Trägerplatte 400, auf deren Oberfläche die jeweiligen Leiterbahnen 60, 61 angeordnet sind, mit mehreren der integrierten Schaltungen 40 bestückt, anschließend die jeweiligen Vergussmassen 20 stoffschlüssig auf der Trägerplatte 400 angeordnet, und anschließend die solcherart bestückte Trägerplatte 400 in (Träger 10 für die bzw. der) einzelne(n) Winkelerfassungseinrichtung(en) geteilt.

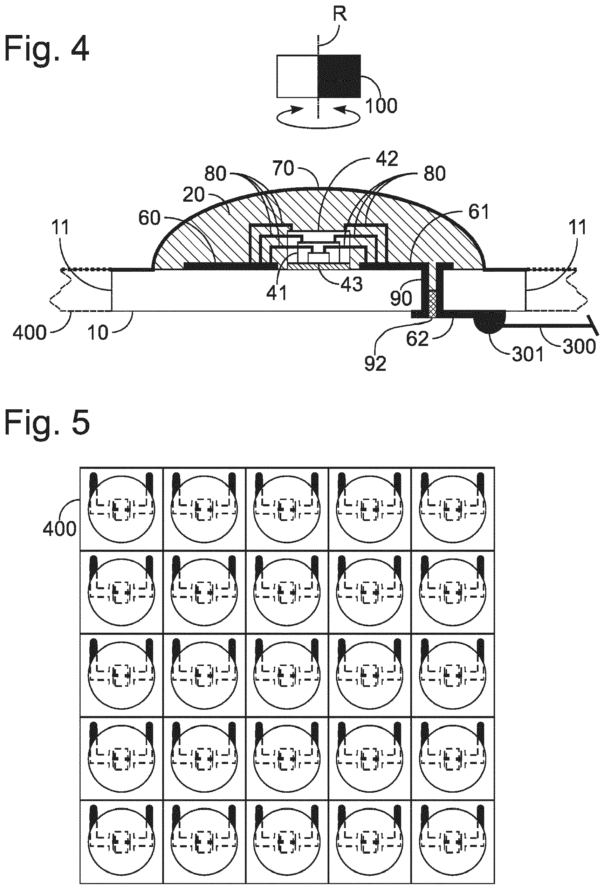

Fig. 4 zeigt eine Winkelerfassungsanordnung nach einer Ausführung der vorliegenden Erfindung, die anstelle der Winkelerfassungsanordnung der Fig. 2, 3 bei der Kraftstoff-Füllstand-Erfassungseinrichtung der Fig. 1 verwendet werden kann.

Dabei sind gleiche oder gleichwirkende Merkmale mit denselben Bezugszeichen gekennzeichnet, so dass Bezug auf die vorstehende Beschreibung genommen und nachfolgend nur auf Unterschiede eingegangen wird.

Im Ausführungsbeispiel der Fig. 4 sind die Leiterbahnen 60, 61 nicht aus der Vergussmasse 20 herausgeführt, sondern mit Durchkontaktierungen 90 verbunden, die den Träger 10 durchgreifen und ihrerseits mit Leiterbahnen 62 verbunden sind, die auf der vergussmassenabgewandten Oberfläche des Trägers 10 (unten in Fig. 4) angeordnet sind. Die Durchkontaktierungen 90 sind mit einem Füllstoff 92 abgedichtet.

Außerdem sind im Ausführungsbeispiel der Fig. 4 der Sensor 41 zur berührungslosen Erfassung der Orientierung des Magnetfeldes des Magneten 100, die Auswerteschaltung in Form eines Nacktchips 42 sowie ein Kondensator 43 separat ausgebildet, jeweils stoffschlüssig auf dem Träger 10 angeordnet und mittels Bond-Drähte 80 mit den Leiterbahn 60, 61 verbunden.

Zudem ist im Ausführungsbeispiel der Fig. 4 die Vergussmasse 20 zwischen Träger 10 und Magnet 100 angeordnet und mit einem kraftstoffbeständigen Überzug 70 beschichtet, wobei insbesondere auch der Rand bzw. Übergangsbereich zwischen Träger und Vergussmasse mit diesem Überzug 70 beschichtet ist.

Fig. 5 zeigt eine Draufsicht auf die Trägerplatte 400 während der Herstellung der Winkelerfassungseinrichtung(en).

Obwohl in der vorhergehenden Beschreibung exemplarische Ausführungen erläutert wurden, sei darauf hingewiesen, dass eine Vielzahl von Abwandlungen möglich sind, solange diese Abwandlungen unter die angefügten Patentansprüche fallen, welche den Schutzbereich der Erfindung definieren.

So können insbesondere statt der gezeigten zwei auch drei oder mehr Leiterbahnen vorgesehen sein.

Zusätzlich oder alternativ kann der Sensor 40 bzw. 41, in einer Ausführung stoffschlüssig, teilweise auf den beiden Leiterbahnen 60, 61 oder einer dieser beiden Leiterbahnen 60, 61 angeordnet sein bzw. werden bzw. diese in einer Ausführung (jeweils) teilweise überdecken.

## Patentansprüche

1. Winkelerfassungseinrichtung für eine Kraftstoff-Füllstand-Erfassungseinrichtung, wobei die Winkelerfassungseinrichtung aufweist:
einen Träger (10); eine Vergussmasse (20), die stoffschlüssig auf dem Träger (10) angeordnet ist;
einen Sensor (40; 41) zur berührungslosen Erfassung einer Orientierung eines Magnetfeldes eines Magneten (100),
wobei der Sensor wenigstens teilweise in der Vergussmasse (20), insbesondere auf dem Träger (10), angeordnet ist, und
wenigstens eine Leiterbahn (60-62), die, insbesondere stoffschlüssig, plan an dem Träger (10) angeordnet ist, **dadurch gekennzeichnet, dass** die wenigstens eine Leiterbahn (60, 61) in der Vergussmasse (20), plan an dem Träger (10) angeordnet ist und mit einer Durchkontaktierung (90), die den Träger (10) wenigstens teilweise durchgreift, verbunden ist.

2. Winkelerfassungseinrichtung nach Anspruch 1, **dadurch gekennzeichnet, dass** ein Außenrand (21) der Vergussmasse (20) von einem Außenrand (11) des Trägers (10) wenigstens 1 mm und höchstens 15 mm entfernt ist.

3. Winkelerfassungseinrichtung nach einem der vorhergehenden Ansprüche,
**dadurch gekennzeichnet, dass** die wenigstens eine Leiterbahn (60, 61), aus der Vergussmasse (20) herausgeführt ist.

4. Winkelerfassungseinrichtung nach einem der vorhergehenden Ansprüche, **dadurch gekennzeichnet, dass** die wenigstens eine Leiterbahn (60, 61), insbesondere über wenigstens eine weitere Leiterbahn (62), mit einem Anschluss (301) verbunden ist, der auf einer vergussmassenzugewandten oder vergussmassenabgewandten Seite des Trägers (10) angeordnet ist.

5. Winkelerfassungseinrichtung nach einem der vorhergehenden Ansprüche, mit einer, insbesondere über die wenigstens eine Leiterbahn (60-62) programmierbaren, Auswerteschaltung (40; 42) zur Auswertung des Sensors (40; 41), die wenigstens teilweise in der Vergussmasse (20), insbesondere auf dem Träger (10), angeordnet, insbesondere als Nacktchip und/oder als integrierte Schaltung (40) mit dem Sensor oder von diesem separat ausgebildet, ist.

6. Winkelerfassungseinrichtung nach einem der vorhergehenden Ansprüche, mit wenigstens einem elektrischen Baustein, insbesondere Kondensator (43), der wenigstens teilweise in der Vergussmasse (20), insbesondere auf dem Träger (10), angeordnet, und mit dem Sensor (41) und/oder der Auswerteschaltung (42), insbesondere über die wenigstens eine Leiterbahn (60, 61), elektrisch verbunden ist.

7. Winkelerfassungseinrichtung nach einem der vorhergehenden Ansprüche, **dadurch gekennzeichnet, dass** der Träger (10) wenigstens einen elektrisch isolierenden Oberflächenbereich und/oder Keramik-, Glas-, Kunststoff- und/oder Epoxidharz-Material und/oder die Vergussmasse (20) Silikon-, Acrylat-, Kunststoff- und/oder Epoxidharz-Material aufweist.

8. Winkelerfassungseinrichtung nach einem der vorhergehenden Ansprüche, **dadurch gekennzeichnet, dass** der Träger (10), die Vergussmasse (20) und/oder wenigstens eine Leiterbahn (60, 61) wenigstens teilweise mit einem Überzug (70) beschichtet ist.

9. Winkelerfassungseinrichtung nach dem vorhergehenden Anspruch, **dadurch gekennzeichnet, dass** der Überzug (70) Parylen aufweist und/oder mittels chemischer Gasabscheidung aufgebracht ist.

10. Winkelerfassungsanordnung mit einer Winkelerfassungseinrichtung nach einem der vorhergehenden Ansprüche und einem beweglichen Magneten (100), **dadurch gekennzeichnet, dass** der Träger (10) zwischen Vergussmasse (20) und Magnet (100) oder die Vergussmasse (20) zwischen Träger (10) und Magnet (100) angeordnet ist und/oder der Magnet (100) um eine Rotationsachse (R) drehbar gelagert ist, die die Vergussmasse (20) schneidet und/oder mit einer Höhenachse des Trägers (10) in Richtung seiner Wandstärke eine Winkel einschließt, der höchstens 45° beträgt.

11. Kraftstoff-Füllstand-Erfassungseinrichtung, insbesondere für ein Kraftfahrzeug, mit einer Winkelerfassungseinrichtung nach einem der Ansprüche 1 bis 9, einem Magneten (100) und einem damit gekoppelten Schwimmer (201), wobei eine Orientierung eines Magnetfeldes des Magneten (100) mittels des Sensors (40; 41) berührungslos erfassbar ist, insbesondere mit einer Winkelerfassungsanordnung nach dem vorhergehenden Anspruch.

12. Verfahren zur Erfassung eines Winkels mittels einer Winkelerfassungseinrichtung nach einem der Ansprüche 1 bis 9 oder mittels einer Winkelerfassungsanordnung nach Anspruch 10, oder mittels einer Kraftstoff-Füllstand-Erfassungseinrichtung nach dem vorhergehenden Anspruch, **dadurch gekennzeichnet, dass** eine Orientierung eines Magnetfeldes des Magneten (100) mittels des Sensors (40; 41) berührungslos erfasst und ein entsprechendes, insbesondere durch die Auswerteschaltung (40; 41) und/oder auf Basis einer in der Winkelerfassungseinrichtung gespeicherten Kennlinie, verarbeitetes, Signal, insbesondere über die wenigstens eine Leiterbahn (60-62), ausgegeben wird.

13. Verfahren zur Herstellung wenigstens einer Winkelerfassungseinrichtung nach einem der Ansprüche 1 bis 9, **dadurch gekennzeichnet, dass** die Vergussmasse (20) stoffschlüssig auf dem Träger (10), insbesondere wenigstens teilweise auf dem Sensor, angeordnet wird, und/oder dass eine Trägerplatte (400) mit mehreren Sensoren (40; 41) bestückt und anschließend in Träger (10) für die Winkelerfassungseinrichtungen geteilt wird.

## Claims

1. Angle detection device for a fuel fill level detection device, where the angle detection device has:
a support (10);
a potting composition (20), which is arranged on the support (10) in coherently bonded manner;
a sensor (40; 41) for the contactless detection of an orientation of a magnetic field of a magnet (100), wherein the sensor is at least partly arranged in the potting composition (20), in particular on the support (10), and
at least one conductor track (60-62) which is arranged flat on the support (10), in particular in coherently bonded manner, **characterized in that** the at least one conductor track (60, 61) in the potting composition (20) is arranged flat on the support (10) and is connected by a through-contact structure (90) which passes at least partly through the support (10) .

2. Angle detection device according to Claim 1, **characterized in that** an external edge (21) of the potting composition (20) is at a distance of at least 1 mm and at most 15 mm from an external edge (11) of the support (10).

3. Angle detection device according to either of the preceding claims, **characterized in that** the at least one conductor track (60, 61) extends beyond the potting composition (20).

4. Angle detection device according to any of the preceding claims, **characterized in that** the at least one conductor track (60, 61) is connected, in particular by way of at least one further conductor track (62), to a connection (301) which is arranged on a side of the support (10), said side facing toward the potting composition or facing away from the potting composition.

5. Angle detection device according to any of the preceding claims, with, for the evaluation of the sensor (40; 41), an evaluation circuit (40; 42) which is in particular programmable by way of the at least one conductor track (60-62) and which is arranged at least partly within the potting composition (20), in particular on the support (10), in particular configured as bare chip and/or as integrated circuit (40) with the sensor, or separately therefrom.

6. Angle detection device according to any of the preceding claims, with at least one electrical component, in particular capacitor (43), which is arranged at least partly within the potting composition (20), in particular on the support (10), and is electrically connected to the sensor (41) and/or to the evaluation circuit (42), in particular by way of the at least one conductor track (60, 61).

7. Angle detection device according to any of the preceding claims, **characterized in that** the support (10) has at least one electrically insulating surface region and/or ceramic material, glass material, plastics material and/or epoxy-resin material, and/or the potting composition (20) comprises silicone material, acrylate material, plastics material and/or epoxy-resin material.

8. Angle detection device according to any of the preceding claims, **characterized in that** the support (10), the potting composition (20) and/or at least one conductor track (60, 61) is coated at least partly with a covering (70).

9. Angle detection device according to the preceding claim, **characterized in that** the covering (70) comprises parylene and/or is applied by means of chemical vapour deposition.

10. Angle detection arrangement with an angle detection device according to any of the preceding claims and with a movable magnet (100), **characterized in that** the support (10) is arranged between potting composition (20) and magnet (100) or the potting composition (20) is arranged between support (10) and magnet (100), and/or the magnet (100) is mounted rotatably around an axis (R) of rotation which passes through the potting composition (20) and/or includes an angle of at most 45° with a height axis of the support (10) in the direction of its wall thickness.

11. Fuel fill level detection device, in particular for a motor vehicle, with an angle detection device according to any of Claims 1 to 9, with a magnet (100) and with a float (201) coupled thereto, where an orientation of a magnetic field of the magnet (100) can be detected in contactless manner by means of the sensor (40; 41), in particular with an angle detection arrangement according to the preceding claim.

12. Method for the detection of an angle by means of an angle detection device according to any of Claims 1 to 9, or by means of an angle detection arrangement according to Claim 10, or by means of a fuel fill level detection device according to the preceding claim, **characterized in that** an orientation of a magnetic field of the magnet (100) is detected in contactless manner by means of the sensor (40; 41), and a corresponding signal, in particular processed via the evaluation circuit (40; 41) and/or on the basis of a characteristic curve stored in the angle detection device, is in particular output by way of the at least one conductor track (60-62).

13. Method for the production of at least one angle detection device according to any of Claims 1 to 9, **characterized in that** the potting composition (20) is arranged in coherently bonded manner on the support (10), in particular at least partly on the sensor, and/or **in that** a plurality of sensors (40; 41) are applied to a support plate (400) and then said support plate (400) is divided to give supports (10) for the angle detection devices.

## Revendications

1. Dispositif de détection d'angle pour un dispositif de détection d'état de remplissage de carburant, le dispositif de détection d'angle comportant :
un support (10) ;
une masse en fusion (20) qui est disposée par complémentarité de matières sur le support (10) ;
un capteur (40 ; 41) conçu pour la détection sans contact d'une orientation d'un champ magnétique d'un aimant (100) ;
le capteur étant disposé au moins en partie dans la masse en fusion (20), notamment sur le support (10) ;
au moins une piste conductrice (60-62) étant notamment disposée par complémentarité de matières, de façon plane au niveau du support (10) ;
**caractérisé en ce que** l'au moins une piste conductrice (60, 61) est disposée dans la masse en fusion (20) de façon plane au niveau du support (10) et est reliée à une mise en contact (90) agrippant au moins en partie le support (10).

2. Dispositif de détection d'angle selon la revendication 1, **caractérisé en ce qu'**une bordure extérieure (21) de la masse en fusion (20) est éloignée d'une bordure extérieure (11) du support (10) d'au moins 1 mm et de tout au plus 15 mm.

3. Dispositif de détection d'angle selon l'une quelconque des revendications précédentes, **caractérisé en ce que** l'au moins une piste conductrice (60, 61) est fabriquée à partir de la masse en fusion (20).

4. Dispositif de détection d'angle selon l'une quelconque des revendications précédentes, **caractérisé en ce que** l'au moins une piste conductrice (60, 61) est reliée à une borne (301) notamment au travers d'au moins une piste conductrice (62) supplémentaire qui est disposée sur un côté orienté vers la masse en fusion ou un côté s'éloignant de la masse en fusion du support (10) .

5. Dispositif de détection d'angle selon l'une quelconque des revendications précédentes, avec un circuit d'analyse (40 ; 42) programmable notamment au travers de l'au moins une piste conductrice (60-62), pour l'analyse du capteur (40 ; 41), ledit circuit étant disposé au moins en partie dans la masse en fusion (20), notamment sur le support (10), notamment sous la forme d'une puce nue et/ou d'un circuit intégré (40) incluant le capteur ou séparé de lui.

6. Dispositif de détection d'angle selon l'une quelconque des revendications précédentes, avec au moins un composant électrique, notamment un condensateur (43) qui est disposé au moins en partie dans la masse en fusion (20), notamment sur le support (10), et avec le capteur (41) et/ou le circuit d'analyse (42), notamment relié électriquement au travers de l'au moins une piste conductrice (60, 61).

7. Dispositif de détection d'angle selon l'une quelconque des revendications précédentes, **caractérisé en ce que** le support (10) comporte au moins une zone superficielle électriquement isolante et/ou en matériau céramique, verre, plastique et/ou résine époxy et/ou que la masse en fusion (20) comporte une matière silicone, acrylate, plastique et/ou résine époxy.

8. Dispositif de détection d'angle selon l'une quelconque des revendications précédentes, **caractérisé en ce que** le support (10), la masse en fusion (20) et/ou au moins une piste conductrice (60, 61) est revêtue au moins en partie avec un enrobage (70).

9. Dispositif de détection d'angle selon la revendication précédente, **caractérisé en ce que** l'enrobage (70) comporte du pyralène et/ou est appliqué à l'aide d'une séparation chimique des gaz.

10. Dispositif de détection d'angle avec un dispositif de détection d'angle selon l'une quelconque des revendications précédentes et un aimant mobile (100), **caractérisé en ce que** le support (10) est disposé entre la masse en fusion (20) et l'aimant (100) ou que la masse en fusion (20) est disposée entre le support (10) et l'aimant (100) et/ou que l'aimant (100) est disposé de façon à pouvoir tourner autour d'un axe de rotation (R) qui divise la masse en fusion (20) et/ou forme un angle de de tout au plus 45° avec un axe en hauteur du support (10) en direction de son épaisseur de paroi.

11. Dispositif de détection d'état de remplissage de carburant, notamment pour un véhicule automobile, avec un dispositif de détection d'angle selon l'une quelconque des revendications 1 à 9, avec un aimant (100) et avec un flotteur (201) ainsi couplé, une orientation d'un champ magnétique de l'aimant (100) pouvant être détectée sans contact à l'aide du capteur (40 ; 41), notamment à l'aide d'un dispositif de détection d'angle selon la revendication précédente.

12. Procédé de détection d'un angle au moyen d'un dispositif de détection d'angle selon l'une quelconque des revendications 1 à 9 ou au moyen d'un dispositif de détection d'angle selon la revendication 10, ou au moyen d'un dispositif de détection d'état de remplissage de carburant selon la revendication précédente, **caractérisé en ce qu'**une orientation d'un champ magnétique de l'aimant (100) est détectée sans contact au moyen du capteur (40 ; 41) et qu'un signal correspondant, notamment travaillé au travers du circuit d'analyse (40 ; 41) et/ou sur la base d'une courbe caractéristique mémorisée dans le dispositif de détection d'angle, notamment au travers de l'au moins une piste conductrice (60-62).

13. Procédé de fabrication de l'au moins un dispositif de détection d'angle selon l'une quelconque des revendications 1 à 9, **caractérisé en ce que** la masse en fusion (20) est disposée par complémentarité de matières sur le support (10), notamment au moins en partie sur le capteur et/ou qu'une plaque de support (400) est composée de plusieurs capteurs (40 ; 41) et ensuite séparée dans le support (10) pour la détection des dispositifs d'angle.
